Europäisches Patentamt

European Patent Office

Office européen des brevets

(19)

(11) EP 1 294 136 A1

(12) **EUROPEAN PATENT APPLICATION**

(43) Date of publication:
19.03.2003 Bulletin 2003/12

(51) Int Cl.⁷: $H04L\ 12/56$

(21) Application number: 01440302.6

(22) Date of filing: 14.09.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventor: **Weis, Bernd X.**
**70825 Korntal (DE)**

(74) Representative: **Urlichs, Stefan, Dipl.-Phys. et al**
**Alcatel**
**Intellectual Property Department,**
**Postfach 300929**
**70449 Stuttgart (DE)**

(54) **Fast restoration mechanism and method of determining minimum restoration capacity in a transmission network**

(57)     In order to restore a network after a failure, it is important to have sufficient spare capacity available. To ensure restorability, a Hamiltonian mesh, being a closed sequence of links traversing each network node exactly once, is determined and half of its capacity is reserved for restoration purpose. In the case of a line failure of a link other than the links of the Hamiltonian mesh, affected traffic is split in two portions and rerouted over the two directions of the Hamiltonian mesh. In the case the network has no Hamiltonian mesh, a mesh coverage is determined and sufficient spare capacity reserved for restoration purpose.

Fig. 3

EP 1 294 136 A1

# EP 1 294 136 A1

## Description

### Field of the Invention

The invention relates to the field of telecommunications and more particularly to a method of restoring a meshed transmission network upon occurrence of a line failure. The invention also relates to a method of determining the minimum restoration capacity in a meshed transmission network and corresponding network planning tool and network management device. Furthermore, the invention relates a network element for a meshed transmission network.

### Background of the Invention

One of the very basic aspects of telecommunications networks is their availability and reliability. Hence, the operation of such a network requires a fast fix of failures by some mechanism. In local area networks (LAN) e.g., in a building or a campus, it might be sufficient to have personnel and a spare pool of equipment as due to the vicinity of the installation repairs or replacements can quickly be done.

Simply because of the geographical dimensions this is not possible or prohibitive in terms of cost in transmission networks like metropolitan or wide area networks (MANs and WANs, respectively). Hence, for these networks the network itself or the combination of network and network management needs to provide the means and facilities to ensure sufficient availability. Typically, these network mechanisms are distinguished in protection and restoration.

Protection mechanisms known from transmission systems like SDH systems (Synchronous Digital Hierarchy) require a 100% spare capacity of resources for protection in the network and provide the means for a very fast masking of the failure in terms of availability, typically in less than 50 ms.

Restoration mechanisms are more stringent in the usage of spare capacity and however, providing a masking of the failure at a lower speed, typically in the range of a few seconds as completely new paths through the network are established.

An example of restoration is shown in figure 2. In case of a failure of one link or node, the affected traffic is re-routed over some other links which have reserved capacity for restoration purpose. The process of re-routing the traffic affected by this failure is called path restoration as new paths are established to replace the failed ones. The time needed to restore a network distinguishes between fast restoration if all paths are restored in about or less than 10 seconds and slow restoration if all paths are restored within a few minutes. If restoration is a functionality provided by the network management it is called centralized restoration, if restoration is a functionality provided by the network itself (like for protection) it is called distributed restoration.

These mechanisms are applicable to basically any network structure - ring, mesh or hub structures or combinations thereof. However, some mechanisms are more suitable to some structure than others - basically the planning requires the specific network at hand to define the optimal configurations.

A basic problem in large networks is to determine where and how much spare capacity needs to be reserved for restoration purpose in order to ensure that any single failure in the network can be fully restored. For most of the today's networks, this has been done manually, by making assumptions and simulating any failures to see whether full restorability is achieved. However, this test has to be performed any time topological changes are made in the network, e.g., by adding or replacing single links or nodes.

### Summary of the Invention

It is therefore an object of the present invention, to provide a method for determining minimum restoration capacity in a network. A further object of the invention is to provide a method of fast restoring a transmission network upon occurrence of a line failure. Other objects of the invention are to provide a network element capable of fast restoration, a network planning tool for determining the minimum restoration capacity in a transmission network and a network management device capable of configuring a transmission network with minimum restoration capacity.

These and other objects that appear below are achieved by a method according to claim 1, a method according to claim 10, a network element according to claim 12, a network planning tool according to claim 11, and a network management device according to claim 13, respectively. Advantageous developments are defined in the dependent claims.

The invention has the advantages, that it allows to determine the minimum restoration capacity required to protect against any single line failures and that it provides the fastest restoration mechanism for large networks.

### Brief Description of the Drawings

Preferred embodiments of the present invention will now be described with reference to the accompanying drawings in which

figure 1     shows a meshed network used as an example to describe the invention;
figure 2     shows the known principle of restoration in the network of figure 1;
figure 3     shows a Hamiltonian mesh in the network of figure 1;
figure 4     shows a logical representation in the form of a ring of the network shown in figure 1;
figure 5     shows restoration of a line failure in the above network;
figure 6     shows the dependency of additional capacity on average node degree in a first embodiment;
figure 7     shows the dependency of additional capacity on average node degree in a second embodiment;
figure 8     shows examples of networks which no Hamiltonian mesh;
figure 9     shows a network coverage with two meshes;
figure 10     shows the dependency of additional capacity on average node degree for a mesh coverage;
figure 11     shows the principle of merging two networks;
figure 12     shows a specific case for merger of chessboard-like networks; and
figure 13     shows a block diagram of a network element used in the above network logically represented as a ring;

## Detailed Description of the Invention

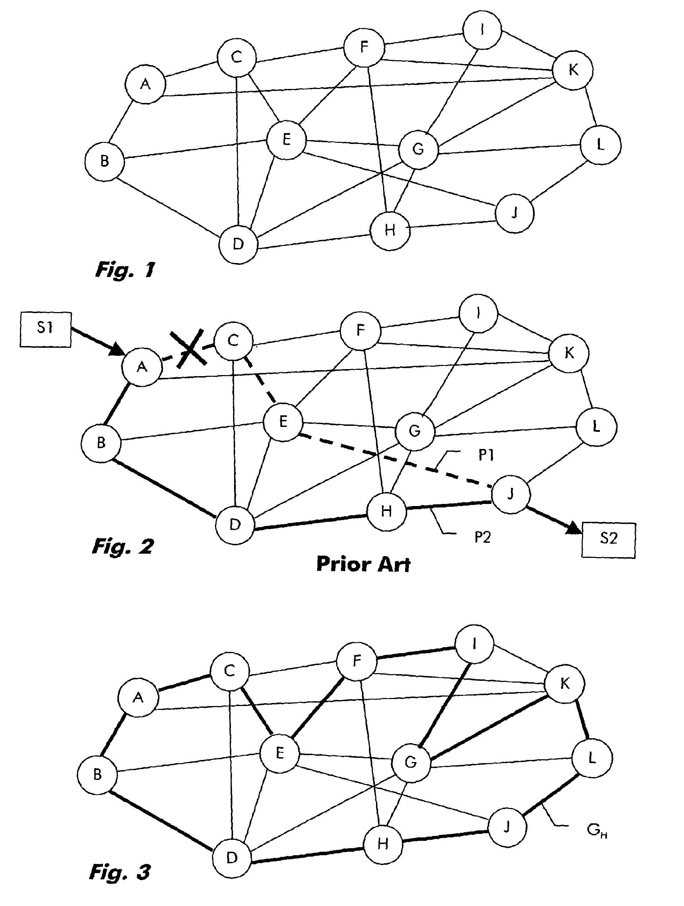

The network topology that will be used as an example in the following description of the invention is shown in figure 1. It consists of network nodes depicted with reference signs A to L. The networks nodes are physically interconnected by transmission lines such as for example optical fibers, coax cables or microwave links. For the sake of simplicity, it is assumed in this example that all transmission lines in the network have the same total transmission capacity. It is further assumed, that each link is bi-directional. As shown in figure 1, the example network topology contains the following physical links: A-B, A-C, B-D, C-D, C-E, D-E, E-F, E-G, E-J, F-I, F-H, F-K, G-H, G-I, G-K, G-L, H-J, I-K, K-L, L-J. The failure type that is considered in the following is a cut of the link between two network nodes.

As mentioned above, figure 2 shows the principle of restoration. Data is transmitted from a source S1 to a sink S2 over a first path P1. The first path P1 is a sequence of links via nodes A, C, E, and J. Now, link A-C is interrupted due to a line failure. This failure is recovered by establishing a new path P2 via nodes A, B, D, H, and J. This implies that some spare capacity was available to establish the new path P2. As network recovery requires reconfiguration of a number of intermediate nodes, this is a slow process. However, as explained previously, it is difficult to determine in advance the amount of spare capacity that is required to allow recovery of any possible failure.

At first, some terminology will now be introduced. Conceptually the topological relationship between the nodes and links of a network can be represented by a graph $G = (V, A)$ where V is the set of nodes, #V in number and A is the set of arcs which interconnect the nodes, #A in number where an arc $a_i$ is defined by two nodes $O(a_i)$ and $T(a_i)$ as well as a set of arc attributes e.g. capacity, cost, etc.

The node degree of a node N is the number of links connected to N. If the total number of links and nodes is given by #A and #V, respectively, then the average node degree d of G is $d = 2 \cdot \#A / \#V$ as each arc is incident to two nodes.

A path between two nodes $N_1$ and $N_2$ is a sequence $b_1, .., b_n$ of n arcs $a_i$ such that $O(b_1) = N_1$, $T(b_n) = N_2$, and $T(b_m) = O(b_{m+1})$, m = 1, ..., n-1 and every node appears only once. With respect to the arcs of the path every node N of the path has degree 2 except nodes $N_1$ and $N_2$ which have degree 1. A mesh is a path where $N_1 = N_2 = N$ and node N appears twice, i.e. $O(b_1) = T(b_n) = N$. In other words, a mesh is a closed sequence of links.

Two nodes are connected if there is a path between the nodes. A graph is

- k-arc connected if for every partition of the node set V into non-empty sets $V_r$ and $V_l$ the removal of k-1 arcs of which one of the nodes is in $V_r$ and one in $V_l$, does not disconnect any two nodes,
- k-node connected if the removal of any k-1 nodes with their incident arcs does not disconnect any two nodes,
- k-connected if it is k-arc and k-node connected.

A cut is a partition of V into two non-empty subsets $V_r$ and $V_l$. The cut set($V_r$, $V_l$) is the set of arcs $a_i$ with one node $O(a_i) \in V_r$ and one $T(a_i) \in V_l$ or vice versa.

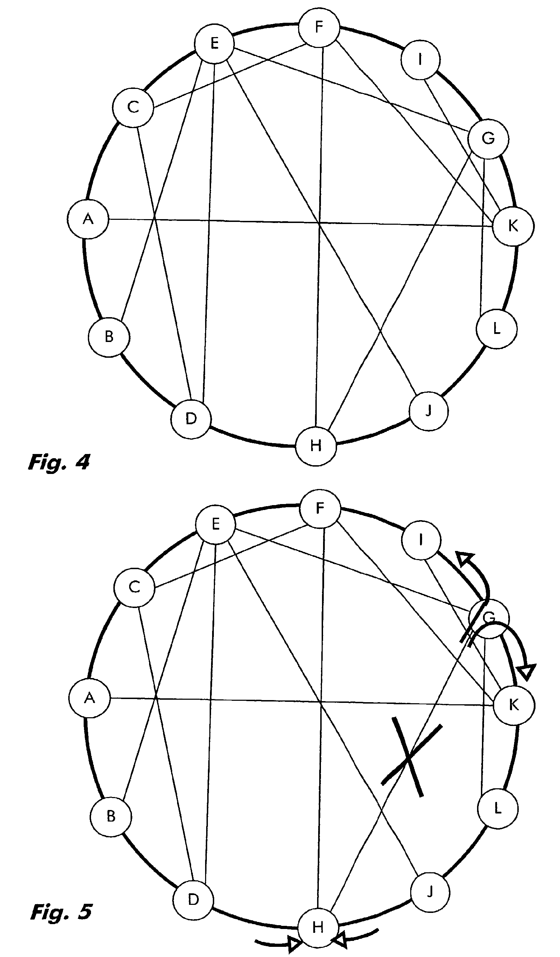

A Hamiltonian mesh $G_h = (V, A_h)$ of G is a mesh visiting all nodes exactly once. By definition every node of this mesh has node degree of exactly 2, i.e. the number of arcs $\#A_h$ of the mesh is exactly the number of nodes #V. In other words, a Hamiltonian mesh is a closed sequence of links traversing each node exactly once. An example of a Hamiltonian mesh is shown in figure 3 by bold lines.

Some basic properties of Hamiltonian meshes are that:

- Hamiltonian meshes are 2-arc connected, i.e. there exist exactly two arc-disjoint paths between any two nodes;

- a Hamiltonian mesh is the mesh with the least number of arcs that is 2-arc connected; and
- every cut set of G contains at least two arcs of the Hamiltonian mesh $G_h$.

A basic idea of the invention is thus, to find a Hamiltonian mesh in a meshed network G = (V, A) and to provide spare capacity primarily on this mesh. In the example network, a Hamiltonian mesh $G_h = (V, A_h)$ can be found as a closed sequence of links via nodes A, C, E, F, I, G, K, L, J, H, D, B and back to A.

As shown in figure 4, a Hamiltonian mesh can be logically represented as a ring. Any network links not part of the Hamiltonian mesh appear as intersecting links in the ring. It is important to understand, that figure 4 is a logical representation of the entire network, and that the network itself has actually not the form of a ring.

In a first embodiment, it is assumed that the capacity offered by the network is fully needed to satisfy traffic requirements. Furthermore, it is assumed that for restoration purpose existing links, i.e. cables or cable ducts are extended with the means to provide this additional capacity, i.e. if a cable or cable duct is cut the restoration capacity assigned to this cable or cable duct is cut as well.

Hence, the question to be answered is how much additional capacity is at least needed to ensure that traffic can be restored.

In this first embodiment of the present invention, the network G = (V, A) is extended with spare capacity by doubling the capacity of any arcs of the Hamiltonian mesh. The capacity thus augmented defines the restoration capacity. The network is now restorable in the event of any possible failure. Under the assumption made above that the non-augmented capacity is fully required to satisfy traffic requirements, this configuration provides also the minimum restoration capacity.

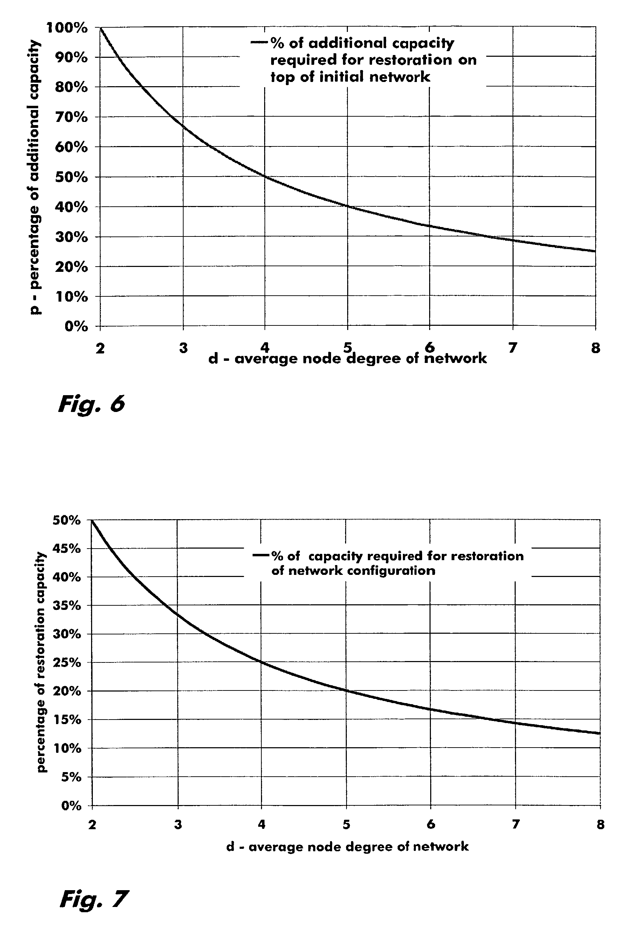

Let p be the percentage of overhead capacity for a network represented by G = (V, A) needed in addition to make it restorable and d be the average node degree of the network. Furthermore, let G have a Hamiltonian mesh $G_h$. Then, the following relation holds $p * d = 2$. The dependency of additional capacity on average node degree in this first embodiment is demonstrated in figure 6.

A second embodiment starts from the assumption that some of the capacity provided by the network G=(V, A) can be assigned for restoration purposes. Furthermore, it is assumed that if a cable or cable duct is cut the restoration capacity assigned to this cable or cable duct is cut as well. Hence, the question to be answered is how much capacity is at least to be reserved to ensure that traffic can be restored if one link fails.

The minimum restoration capacity in this second embodiment is found according to the invention by (step 1:) constructing a Hamiltonian mesh $G_h=(V, A_h)$ and (step 2:) reserving half of the capacity of each link of the Hamiltonian mesh as restoration capacity.

Obviously, the traffic in each arc of the Hamiltonian mesh can be restored. Further, all other arcs can be restored since half of the traffic can be routed clockwise and the other half of the traffic counter-clockwise through the Hamiltonian mesh. Furthermore, since any arc failure results in a full usage of the restoration capacity provided this restoration capacity provision is the absolute minimum possible for any network with balanced link capacities.

Let p be the percentage of capacity for a network represented by G = (V, A) needed to make it restorable and d be the average node degree of the network. Furthermore, let G have a Hamiltonian mesh $G_h$. Then, the following relation for the second embodiment holds $p * d = 1$. The dependency of reserved capacity on average node degree in this second embodiment is demonstrated in figure 7.

Restoration of the network in case of a single link failure is performed according to the following algorithm:

Case 1: If the failed link is element of the Hamiltonian mesh re-route all failed traffic along the other links of the Hamiltonian mesh.

Case 2: If the failed link is not in the Hamiltonian mesh re-route half of the failed traffic clockwise through the reserved capacity of the Hamiltonian mesh links and the other half counter-clockwise.

Using the network representation of figure 4, restoration of a failure is shown schematically in figure 5. In this example, intersecting link H-G is cut and traffic from G to H needs to be restored. Since half of the capacity of the Hamiltonian mesh is reserved for protection, node G splits traffic destined for node H into two portions of equal size and transmits one portion clockwise and the other portion counter-clockwise around the Hamiltonian mesh. Restoration of the reverse direction from H to G is done accordingly (not shown).

As long as there is no failure in the ring, an idle signal is transmitted around the mesh in the reserved capacity. Such idle signal is also called "unequipped" signal. This means that any node in the network switches this unequipped signal from corresponding input to corresponding output port, irrespective of what the signal carries. In the case of a failure, only the nodes terminating the failed link need to be reconfigured to receive the affected traffic from the ports corresponding to the Hamiltonian mesh. Any intermediate node switch the signal that carries portion of the affected traffic through in the same manner as the unequipped signal before. Since the receiving node H detects the failure, he awaits traffic over the Hamiltonian mesh and knows therefore, that this traffic on the reserved capacity channel is destined for him. Hence, no additional signaling is required between any nodes to restore the network. As only the terminating nodes need to be reconfigured, restoration is very fast.

In spite of this, some transmission networks may require reconfiguration of the intermediate nodes, for example in the case of SDH, each input port must be configured to accept an actual signal structure. As the basic SDH transmission frame, which is called STM-N, carries higher order virtual containers VC-4, which may either be concatenated or not, and as concatenated VC-4 and non-concatenated VC-4 require different processing with respect to their pointers, it is mandatory that each input interface knows the signal structure it received. However, this reconfiguration can be done internally in the node without interaction of network management. Reconfiguration may be achieved in a node by detecting the actual signal structure and configuring the corresponding interface to accept this structure.

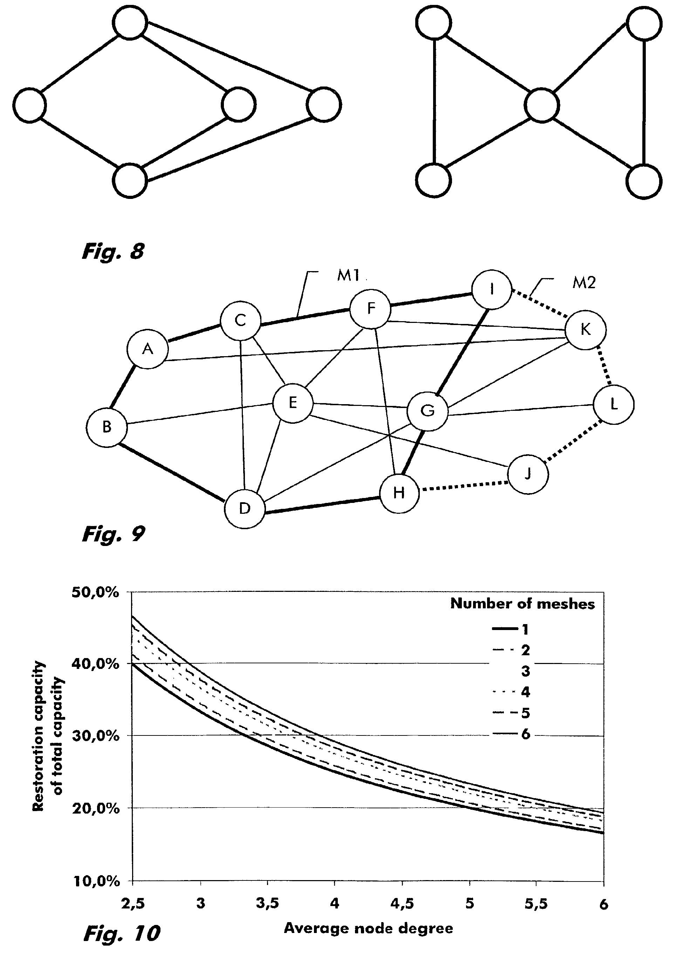

Unfortunately there are networks that do not have a Hamiltonian mesh. Some examples are depicted in figure 8. Obviously, these configuration can be found in real networks. Furthermore, finding a Hamiltonian mesh in an arbitrary network represented by a graph G=(V, A) is an NP-complete problem, and hence, difficult to find. Furthermore, there are no suitable conditions of the existence of a Hamiltonian mesh in a graph, since all the graphs with a guaranteed Hamiltonian mesh are graphs with a degree of "meshedness" that is not found in real applications.

However, a relaxation of the problem of finding a Hamiltonian graph is the one to find a mesh cover of the graph G. A mesh cover of G is a set of #M meshes $M_i = (V_{Mi}, A_{Mi})$ such that

- each node N of G is covered by at least one mesh and that
- any mesh has at least one node in common with another mesh.

The invention takes advantage of the recognition that any 2-arc connected graph has a mesh cover.

In the case where no Hamiltonian mesh can be found, planning of the network G=(V, A) in accordance with the present invention is performed with the following algorithm:

Algorithm: Mesh cover search

Step 0: i=1
Step 1: Pick one link $a_k$ from G and find a path between its two end nodes omitting $a_k$. Together with $a_k$ this path defines a mesh $M_i$.
Step 2: Pick a node $N_p \notin V_{Mi}$ and a node $N_q \in V_{Mi}$ for some i. By definition there exist two link-disjoint paths between these two nodes and for at least two links there are $a_i, a_k \notin A_{Mi}$ for all i. Eventually together with some links of the meshes $M_i$ these links form a mesh $M_{i+1}$.
Step 3: Since G is 2-link connected this process can be continued until all nodes are covered.
Step 4: Reserve C/2 of each link of the meshes as restoration capacity.

Figure 9 depicts this situation where a mesh cover of G is constructed starting from an arbitrary mesh M1 (bold lines) in G by adding an extra mesh M2 from/to a nodes of the mesh to some node not in the current mesh (dotted lines). Let p be the percentage of capacity for a network G = (V, A) needed to make it restorable and d be the average node degree of the network. Let M be the set of meshes that covers G. Then, the following relation holds

$$p * d = \left( 1 + \frac{\#M\text{-}1}{\#V} \right).$$

Figure 10 depicts a numeric evaluation for a network with 30 nodes in accordance with this relation.

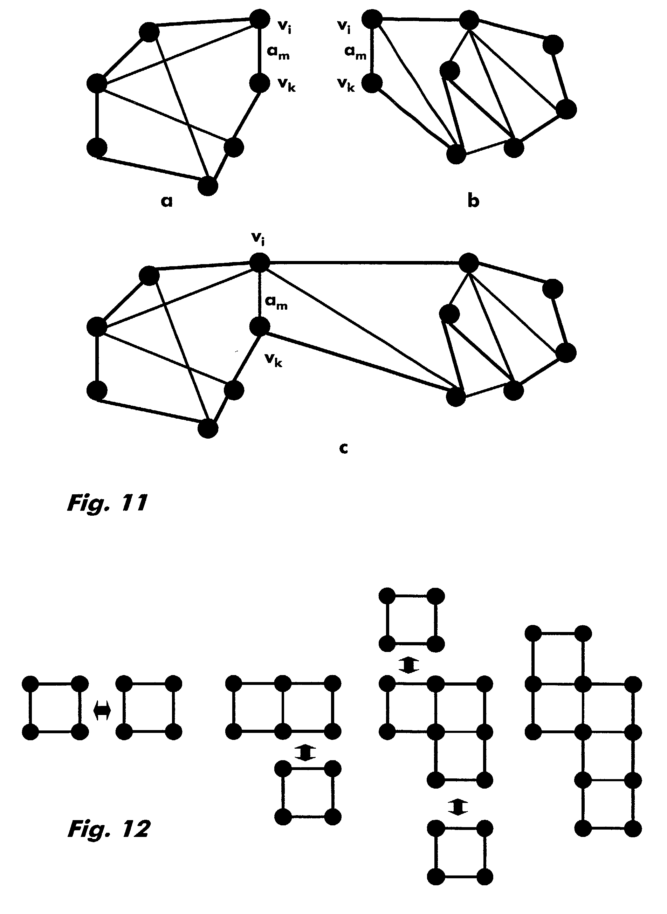

Given two graphs G' = (V', A') and G" = (V", A") both having a Hamiltonian mesh $G'_h$ and $G''_h$, respectively. The two graphs are merged such that two adjacent nodes of $G'_h$ are merged with two adjacent nodes of $G''_h$ eventually omitting the excess arc. Then the resulting graph
G = (G' ∪ G") = (V' ∪ V", A' ∪ A") has a Hamiltonian mesh. Merging two graphs with Hamiltonian meshes (bold lines) is shown in figures 11a-c. Figure 11a shows a first network with Hamiltonian mesh, figure 11b shows a second network with Hamiltonian mesh, and figure 11c shows the merged network.

A special case are graphs constructed according to merging method where starting with a graph of 4 nodes having a Hamiltonian mesh, other graphs of 4 nodes with a Hamiltonian mesh are successively merged. Eventually this results in structures similar to a chess board all of which contain a Hamiltonian mesh. By definition this results in a graph with an even number of nodes. This "chess board topology" is shown in figure 12. Hence, any graph G = (V, A) that contains a subgraph $G_c = (V, A_c)$ isomorphic to a chess board graph has a Hamiltonian mesh.

Chess board topologies - in the generalized sense depicted in figure 11- are rather common topologies found in geographically distributed networks. Therefore, in most of the network installations a Hamiltonian mesh can easily be detected and hence, the minimum restoration capacity can be found.

As outlined above , finding a Hamiltonian mesh is an NP-complete problem and thus, the appropriate methodology to search for a Hamilton mesh is deploying a 'branch-and-search' algorithm. However, it is recognized that in the networking case there are as many computers available as there are nodes in the network. An improvement of the present invention therefore proposes a distributed implementation of the Hamilton mesh search.

GMPLS (Generalized Multi-Protocol Label Switching) has gained plenty of attention recently as it promises to be the technology for very fast connection provisioning even without the intervention of a central instance of network management. GMPLS is described in the articles

- Banerjee, A. et al., "Generalized Multiprotocol Label Switching: An Overview of Routing and Management Enhancements", IEEE Communications Magazine, Vol. 39, No. 1, January 2001, and
- Banerjee, A. et al., "Generalized Multiprotocol Label Switching: An Overview of Signalling Enhancements and Recovery Techniques", IEEE Communications Magazine, Vol. 39, No. 7, July 2001,

which are incorporated by reference herein. The basic idea is that path possibilities negotiated between the network elements and eventually setting up the corresponding paths - and for that the network elements use the protocol called GMPLS. Furthermore, as GMPLS is subject to considerable standardization efforts, its deployment ensures the interworking of different vendors' equipment.

Since the dynamic bandwidth allocation algorithms with GMPLS requires distributed processing in the nodes of the network, the distributed computational platform is already in place and can be used for a distributed Hamilton path search.

For this implementation the following protocol is suggested. When the search process is started a seed node initiates the following message to all its neighbors: Message = (ListOfNodesVisited, IncurredCost)

Initially the ListOfNodesVisited contains the Node ID of the seed node only and the IncurredCost = 0. Each receiving node $N_{rec}$ evaluates the incoming message according to the following algorithm:

Algorithm: Distributed Hamilton mesh search

Step 1: $N_{rec}$ updates IncurredCost with the cost assigned to the link through which the message has been received.
Step 2: Processing of "ListOfNodesVisited".
Case 1: If $N_{rec}$ is not in the "ListOfNodesVisited" the node appends its $N_{rec}$ID to the list and forwards the message to all its topological neighbours.
Case 2: If $N_{rec}$ is in the list, the message is evaluated since a mesh has been found. With #L the length of the ListOfNodesVisited and q the list position of N then obviously the length of the mesh is #L - q + 1.
Case 2a: If the mesh length is #V then a Hamilton mesh has been found an the network is notified of this event with a broadcast message terminating the search process.
Case 2b: If the mesh length less is #V the node saves the longest mesh with least IncurredCost.

However, even with a distributed implementation a combinatorial explosion in terms of algorithmic complexity cannot be excluded since the existence of a Hamiltonian mesh is not ensured. The number of messages to be checked in a node may be as many as

$$Max\#OfMessages = \underset{1 \le k \le \#V\text{-}1}{Max}\left(\binom{\#V\text{-}2}{k\text{-}1}(k\text{-}1)!\,\frac{d^k}{(\#V\text{-}1)^k}\right)$$

This results e.g. for a network with #V = 30 nodes with an average node degree d = 3,5 in almost 400.000 messages. These figures indicate that a simple Hamilton mesh search may not yield the desired result, even if this would in principle be possible as the messages have only few bytes length.

In order to facilitate a capacity assignment that ensures the following improved procedure is suggested:

When initiating the search for a Hamiltonian mesh the seed node defines a time-out that terminates this search if no Hamiltonian mesh has been found. It can be assumed that the time-out is chosen such that at least one mesh has been found. When the search is terminated because of time-out each node communicates its largest mesh to the seed node. The seed node arbitrates on the results and communicates the largest mesh to the other network nodes.

Nodes not in this mesh initiate now a search for node-disjoint largest paths ending at a node of the largest mesh in a similar manner as described before and in algorithm of finding a mesh cover. After the termination of this algorithm a mesh cover has been identified and the restoration capacities can be assigned.

Even though the assignment of restoration capacities needs to be done when planning the network, the implementation according to the procedure described above allows a dynamic re- assignment of the restoration capacities. A re-assignment might become necessary to avoid network bottle-necks which can be anticipated by the traffic engineering tool that commonly is used in co-operation with GMPLS based provisioning algorithms. In this re-assignment those links of the network graph are omitted which have a traffic assignment of more that C/2.

The fastest way to restore the network in case of a link failure is to set up a circular paths along the meshes with restoration capacity reservations. In the case of the Hamiltonian mesh and a restoration event only the network elements at the end nodes of the failed link needs to be reconfigured which can be done easily and fast.

The configuration of all network elements in the network can also be done by a central network management device which has knowledge on the topology of the network. The network management determines a Hamiltonian mesh or if the network does not have a Hamiltonian mesh for topological reasons, a mesh coverage and reserves part or the total link capacity of the Hamiltonian mesh or mesh coverage for restoration purpose.

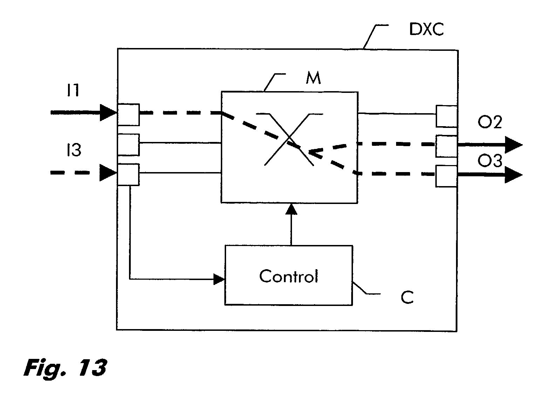

A network element according to the invention is presented in figure 13. This network element is a digital cross-connect DXC with a number of input ports and output ports. For sake of simplicity, only three input and output ports are shown in the figure. The input and output ports are connected to a switching matrix M which is controlled by a control unit C. The input ports perform a check as to see whether there is a received signal and whether the received signal is valid. An alarm signal from the input ports feeds to the control unit C.

The operation of the network element in the case of a failure is the following: An input signal I3 is corrupt due to a line failure. The corresponding input ports detects the failure condition and reports this as an alarm signal to the control unit C. Responsive to detecting the failure condition, the control units configures the switching matrix M to recover the failure. It is assumed in this example, that traffic signal I3 is to be routed under normal operation in the reverse to failed signal 13. As the network element detects a failure in receive direction of 13, it is clear that also the transmit direction would be affected by the failure and traffic signals to be transmitted in this reverse direction need thus be rerouted. This is done in the switching matrix M under the control of control unit C by splitting the traffic signal into two equal portions and switching the two portions to corresponding output ports which transmit these two signals portions as signals O2 and O3. O2 and O3 represent in this example the two directions of a Hamiltonian mesh as described previously. This operation effects the failure recovery as shown in figure 5 by network node G.

The present invention provides a mechanism for ultra-fast restoration in balanced networks. The basic mechanism is entirely based on the topological properties of a network allowing a best allocation of minimum additional capacities needed to make the network restorable. The only topological parameter needed to evaluate the amount of spare capacity required to achieve full restorability is the average node degree giving an indication of the "meshedness" of the network.

The above embodiments have been described using an example network topology under the assumption that all links in the network have equal capacity. However, this assumption was introduced for sake of simplicity only and it should be understood that the present invention is not bound to such network topology but can be applied to any meshed network. It should be clear to those skilled in the art, taking into account the principles and rules as described above, that many alternatives and variations of the present invention are possible. The invention as described above is particularly applicable to SDH/SONET type networks (ITU-T G.707) and OTN type networks (ITU-T G.709).

### Claims

1. A method of restoring a meshed transmission network upon occurrence of a line failure, said method comprising the steps of:

   - determining at least one mesh ($G_H$) in the network, said mesh being a closed sequence of bi-directional links traversing each node (A-L) part of the mesh exactly once;
   - reserving transmission capacity within said mesh ($G_H$) for restoration purpose; and
   - in the case of a failure of a link in the network, rerouting traffic from the failed link over said mesh using said reserved capacity.

2. A method according to claim 1, wherein, said mesh is a Hamiltonian mesh ($G_H$) traversing each node (A-L) in the network exactly once

3. A method according to claim 2, wherein, if no Hamiltonian mesh could be found for the network, the method comprises the step of determining a mesh coverage of two or more meshes (M1, M2) for the network and reserving transmission capacity within said meshes (M1, M2) for restoration purpose.

4.  A method according to claim 2, comprising the steps of

    -   reserving half of the link capacity of said Hamiltonian mesh ($G_H$) for restoration purpose and
    -   in the case of a failure, splitting traffic to be transmitted over the failed link into two portions and rerouting said two portions over the two directions of said Hamiltonian mesh using said reserved capacity.

5.  A method according to claim 2, comprising the steps of

    -   augmenting the capacity of said Hamiltonian mesh ($G_H$) by an amount identical to the previous mesh capacity; and
    -   reserving said augmented capacity for restoration purpose.

6.  A method according to claim 1, comprising the step of routing during failure-free operation an idle signal along said mesh using said reserved capacity.

7.  A method according to claim 1, wherein said step of rerouting is carried out in the end nodes (G, H) of said failed link, only.

8.  A method according to claim 2, wherein said step of determining a Hamiltonian mesh ($G_H$) is carried out using a distributed search by spreading messages between the network nodes using GMPLS protocol.

9.  A method according to claim 8, wherein a time-out is applied to the messages to avoid explosion of the number of generated messages and wherein in the case the time-out lapses without finding a Hamiltonian mesh, the largest mesh found is taken and a distributed search is initiated under the nodes not part of the largest mesh to determine a mesh coverage.

10. A method of determining the minimum restoration capacity in a meshed transmission network, said method comprising the steps of

    -   determining a Hamiltonian mesh ($G_H$) in the network, said Hamiltonian mesh being a closed sequence of bi-directional links traversing each node (A-L) of said network exactly once; and
    -   reserving half of the transmission capacity within said Hamiltonian mesh ($G_H$) for restoration purpose.

11. A network planning tool for determining the minimum restoration capacity in a meshed transmission network, said tool comprising means for determining a Hamiltonian mesh ($G_H$) in the network, said Hamiltonian mesh being a closed sequence of bi-directional links traversing each node (A-L) of said network mesh exactly once.

12. Network element (DXC) in a meshed transmission network, said network element being part of a mesh ($G_H$) being a closed sequence of bi-directional links traversing each node (A-L) part of said mesh exactly once, part of the transmission capacity within said mesh being reserved for restoration purpose; said network element comprising:

    -   means for detecting a failure of a link terminated by said network element; and
    -   means (M, C) for splitting traffic to be transmitted over the failed link into two portions and rerouting said two portions over the two directions of said mesh using said reserved capacity.

13. A network management device for configuring network elements (A-L) of a meshed transmission network, said device comprising

    -   means for determining a mesh ($G_H$) in the network, said mesh being a closed sequence of bi-directional links traversing each node part of said mesh exactly once; and
    -   means for configuring said network elements (A-L) part of said mesh ($G_H$) to reserve part of the transmission capacity within said mesh for restoration purpose.

**Fig. 1**

**Fig. 2**

**Prior Art**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**European Patent Office**

# EUROPEAN SEARCH REPORT

Application Number

EP 01 44 0302

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 327 020 A (ERICSSON TELEFON AB L M) 6 January 1999 (1999-01-06) * abstract * * page 1, line 9 – page 2, line 32 * * figures 1-4 * | 1,10-13 | H04L12/56 |
| X | US 5 974 027 A (CHAPMAN STEPHEN TAYLOR) 26 October 1999 (1999-10-26) * abstract * * column 1, line 53 – column 2, line 61 * * column 3, line 14 – line 25 * | 1,10-13 | |
| A | US 5 297 137 A (OFEK YORAM ET AL) 22 March 1994 (1994-03-22) * abstract * * column 1, line 38 – column 2, line 42 * * column 5, line 62 – column 6, line 31 * * figures 7,8 * | 1-13 | |
| A | US 6 141 319 A (DIGHE RAJIV S ET AL) 31 October 2000 (2000-10-31) * abstract * * column 1, line 66 – column 2, line 35 * | 1-13 | **TECHNICAL FIELDS SEARCHED (Int.Cl.7)** H04L |
| A,D | BANERJEE A ET AL: "GENERALIZED MULTIPROTOCOL LABEL SWITCHING: AN OVERVIEW OF ROUTING AND MANAGEMENT ENHANCEMENTS" IEEE COMMUNICATIONS MAGAZINE, IEEE SERVICE CENTER. PISCATAWAY, N.J, US, vol. 39, no. 1, 1 January 2001 (2001-01-01), pages 144-150, XP001006845 ISSN: 0163-6804 * abstract * | 1-13 | |

The present search report has been drawn up for all claims

| Place of search | Date of completion of the search | Examiner |
|---|---|---|
| MUNICH | 28 January 2002 | Wolf, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 44 0302

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2002

| Patent document cited in search report | | Publication date | Patent family member(s) | | Publication date |
|---|---|---|---|---|---|
| GB 2327020 | A | 06-01-1999 | AU | 8729998 A | 25-01-1999 |
| | | | WO | 9901963 A1 | 14-01-1999 |
| | | | EP | 0998804 A1 | 10-05-2000 |
| US 5974027 | A | 26-10-1999 | AT | 208974 T | 15-11-2001 |
| | | | AU | 686736 B2 | 12-02-1998 |
| | | | AU | 1586095 A | 04-09-1995 |
| | | | CA | 2182701 A1 | 24-08-1995 |
| | | | CN | 1141105 A ,B | 22-01-1997 |
| | | | DE | 69523898 D1 | 20-12-2001 |
| | | | EP | 0745294 A1 | 04-12-1996 |
| | | | FI | 963247 A | 19-08-1996 |
| | | | WO | 9522860 A1 | 24-08-1995 |
| | | | GB | 2286745 A ,B | 23-08-1995 |
| | | | JP | 9509028 T | 09-09-1997 |
| | | | NZ | 279284 A | 29-01-1997 |
| | | | ZA | 9501190 A | 05-03-1996 |
| US 5297137 | A | 22-03-1994 | NONE | | |
| US 6141319 | A | 31-10-2000 | NONE | | |

EPO FORM P0459

For more details about this annex : see Official Journal of the European Patent Office, No. 12/82